# EUROPEAN PATENT SPECIFICATION

(11) **EP 0 341 933 B1**
(45) Date of publication and mention of the grant of the patent: **21.04.1993**
(21) Application number: 89304582.3
(22) Date of filing: 05.05.1989
(51) Int. Cl.: G01M 3/04, G01M 3/16

(54) **Leakage sensor for electrically conductive liquids**
Lecksensor für elektrische leitende Flüssigkeiten
Palpeur de fuite pour liquides électriquement conductifs

(30) Priority: 09.05.1988 JP 60043/88 U
(43) Date of publication of application: 15.11.1989
(73) Proprietor: JUNKOSHA CO. LTD., Setagaya-ku Tokyo 156 (JP)
(72) Inventor: Akiba, Juji, Iruma-gun Saitama (JP)
(74) Representative: Klunker . Schmitt-Nilson . Hirsch

(56) References cited:
- EP-A- 0 170 174
- EP-A- 0 262 667
- DE-A- 3 441 924
- PATENT ABSTRACTS OF JAPAN, vol. 10, no. 198 (P-476)(2254), 11 July 1986 ; & JP-A-6141153 (CANON INC.), 27.02.1986.

## Description

The present invention relates to a leakage sensor in coaxial cable form for detecting leakage of electrically conductive liquids.

Japanese Patent Publication No. 59-47256 discloses a sensor in coaxial cable form designed for the detection of electrically non-conductive fluids. This sensor comprises a continuously porous polytetrafluoroethylene (PTFE) material which contains an electrically conductive substance, the material being installed between a core conductor and an outer shielding conductor. Leaking oil or various types of gases can penetrate into the PTFE material, causing a drop in the electrical conductivity between the conductors, and leakage is thus detected by electrically detecting this drop in conductivity.

The PTFE material is water-repellent rather than hydrophilic, and hence the sensor is unsuitable for the detection of electrically conductive liquids such as water and aqueous solutions.

The DE-A-3 441 924 discloses a leakage sensor suitable for detecting leakage of electrically conductive liquids. The sensor is in the form of a coaxial cable and comprises an electrically conductive core, an electrically insulating material surrounding the core and being capable of absorbing the electrically conductive liquid to be detected, and a liquid permeable, electrically conductive shield surrounding and in contact with the insulating material.

In the EP-A-0 170 174 a further leak detecting sensor in coaxial cable form is disclosed. This known sensor serves for detecting leaks of electrically conductive liquids including acid or alkali solutions and comprises a core conductor, an electrically insulating covering over the core conductor, said covering being of a material which absorbs the electrically conductive liquid that is to be detected, and a shielding conductor over said covering and in contact therewith . The shielding conductor is formed of braided aluminium wires. The property of acid- or alkali-degradability or attackability of aluminium is used to enhance sensitivity for acid and alkali solutions, because of the fact that any acid or alkali solution not only penetrates the aluminium shielding and the electrically insulating covering, causing the core conductor and the shielding conductor to be electrically bridged but also dissolves the aluminium shielding thus further altering conduction between the shielding and the core.

In view of the foregoing, it is an object of the present invention to provide an improved leak detecting sensor in coaxial cable form for a exclusive detection of leaks of electrically conductive aqueous acid or alkali solutions.

According to the present invention there is provided a leakage sensor for detecting leakage of electrically conductive liquids, the sensor being in the form of a coaxial cable and comprising an electrically conductive core, an electrically insulating material which surrounds the core and is capable of absorbing the electrically conductive liquid to be detected, and a liquid permeable, electrically conductive shield surrounding and in contact with the insulating material, and the sensor is characterized in that the insulating material is a non-woven fabric of polyester fibres and the sensor comprises further a layer of aluminium foil surrounding the shield.

The sensor may have a protective outer layer comprising a liquid permeable fabric and surrounding the aluminium foil.

In operation, when an electrically conductive liquid leaking from an object reaches a sensor in accordance with the invention, the liquid passes through the liquid permeable shield and penetrates into the liquid absorbing material surrounding the central core. The core and the shield are thus bridged by this liquid so that the electrical resistance between the two conductors formed by the core and the shield decreases. This change is measured electrically and, as a result, the leakage of the conductive liquid is detected. The leakage could also be detected by measuring the change in the impedance, capacitance or loss angle occurring between the conductors when the conductive liquid penetrates into the liquid absorbing, insulating material.

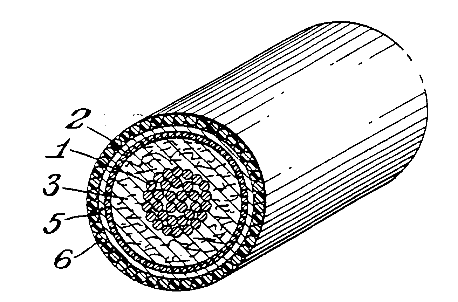

A preferred embodiment of the present invention will now be described, by way of example only, with reference to the accompanying drawing, which is a part perspective, part cross-sectional view of a example of a leakage sensor in accordance with the invention.

The sensor comprises a core conductor 1 made up of twisted strands of wire, and a braided, liquid permeable shield forming an outer conductor 2. A liquid absorbing, electrically insulating material 3 is installed between the core conductor 1 and the liquid permeable outer conductor 2, so that the liquid absorbing material 3 is in contact with both of the conductors 1,2. The liquid absorbing material 3 preferably comprises a non-woven fabric of polyester fibres, and is wrapped spirally around the circumference of the core conductor 1. The liquid absorbing material 3 is capable of thoroughly and rapidly absorbing conductive liquids, such as water and aqueous solutions of acids and alkalis.

The sensor is designed to be used to detect leakage of aqueous acid or alkali solutions, and has an aluminium foil tape 5 wrapped spirally around the periphery of the liquid permeable outer conductor 2. Outside the aluminium foil tape 5 the sensor has a protective braided layer 6 made of a polyester resin which allows the passage of aqueous liquids therethrough.

Before use, the sensor is first cut to an appropriate length, and the terminals of the two conductors 1,2 are connected to a suitable detection circuit.

In use, a neutral liquid penetrating the protective outer layer 6 of the sensor will be blocked by the aluminium foil tape 5 and will not be detected. However, if an acid or alkali solution should penetrate the layer 6, the aluminium foil tape 5 will dissolve so that the liquid can penetrate further into the sensor, passing through the liquid permeable outer conductor 2 for absorption by the liquid absorbing material 3 and causing the conductors 1,2 to be electrically bridged. This causes a change in the impedance between the conductors 1,2, and the leakage can thus be detected by measuring the impedance change with a detector which is connected to the conductors. In this case as well, the liquid absorbing material 3 reliably and rapidly absorbs the leaking liquid, so that a relatively small leakage can be detected with high sensitivity.

As has been described hereinbefore, a sensor in accordance with the ivention comprises a liquid absorbing insulating material which absorbs electrically conductive liquids and is installed between a core conductor and a liquid permeable outer conductor. Any leaking conductive liquid contacting the sensor is reliably and rapidly absorbed by the liquid absorbing material and the conductors are bridged. As a result, the leakage can be detected by measuring the change in the resistance between the conductors. Since even a small amount of leaking liquid will be absorbed by the liquid absorbing material, high-sensitivity detection is possible. Furthermore, since the sensor is in the form of a coaxial cable, leakage can also be accurately detected by measuring the change in impedance that occurs when the leaking conductive liquid is absorbed by the liquid absorbing material.

The amount of liquid that is absorbed can be increased or decreased by adjusting the thickness of the liquid absorbing material 3, and in this way the detection sensitivity of the sensor can be adjusted.

## Claims

1. A leakage sensor for detecting leakage of electrically conductive liquids, the sensor being in the form of a coaxial cable and comprising an electrically conductive core (1), an electrically insulating material (3) which surrounds the core (1) and is capable of absorbing the electrically conductive liquid to be detected, and a liquid permeable, electrically conductive shield (2) surrounding and in contact with the insulating material (3), **characterized** in that the insulating material (3) is a non-woven fabric of polyester fibers and the sensor comprises further a layer of aluminium foil (5) surrounding the shield (2).

2. A sensor according to claim 1 characterized by a protective outer layer (6) comprising a liquid permeable fabric and surrounding the foil (5).

## Patentansprüche

1. Lecksensor zur Leckerfassung elektrisch leitender Flüssigkeiten, wobei der Sensor die Form eines Koaxialkabels hat und einen elektrisch leitenden Kern (1), ein elektrisch isolierendes Material (2), welches den Kern (1) umgibt und die zu erfassende elektrisch leitende Flüssigkeit zu absorbieren vermag, und eine flüssigkeitsdurchlässige, elektrisch leitende Abschirmung (2), die das isolierende Material (3) umgibt und in Berührung mit ihm steht, aufweist, **dadurch gekennzeichnet**, daß das isolierende Material (3) ein nicht-gewebter Stoff aus Polyesterfasern ist und der Sensor ferner eine Schicht aus einer Aluminiumfolie (5) aufweist, welche die Abschirmung (2) umgibt.

2. Sensor nach Anspruch 1, **gekennzeichnet durch** eine äußere Schutzschicht (6) aus einem flüssigkeitsdurchlässigen Stoff, der die Folie (5) umgibt.

## Revendications

1. Capteur de fuite pour détecter une fuite de liquides électriquement conducteurs, le capteur se présentant sous la forme d'un câble coaxial et comprenant une âme électriquement conductrice (1), un matériau électriquement isolant (3) qui entoure l'âme (1) et qui peut absorber le liquide électriquement conducteur qui doit être détecté et une gaine imperméable aux liquides et électriquement conductrice (2) qui entoure le matériau isolant (3) et qui est en contact avec, caractérisé en ce que le matériau isolant (3) est une étoffe non tissée de fibres de polyester et en ce que le capteur comprend en outre une couche constituée par une feuille d'aluminium (5) qui entoure la gaine (2).

2. Capteur selon la revendication 1, caractérisé par une couche externe de protection (6) qui comprend une étoffe perméable aux liquides et qui entoure la feuille (5).
